(19) Europäisches Patentamt
European Patent Office
Office européen des brevets

(11) Numéro de publication: **0 315 546**
**A1**

(12) # DEMANDE DE BREVET EUROPEEN

(21) Numéro de dépôt: **88402783.0**

(22) Date de dépôt: **04.11.88**

(51) Int. Cl.⁴: **G 01 V 1/20**
G 08 G 1/01, G 01 B 7/00

(30) Priorité: **04.11.87 FR 8715302**

(43) Date de publication de la demande:
**10.05.89 Bulletin 89/19**

(84) Etats contractants désignés:
**AT BE CH DE ES FR GB GR IT LI LU NL SE**

(71) Demandeur: **Laborderie, Alain**
**3, rue du Canal**
**F-91190 Saint-Aubin (FR)**

(72) Inventeur: **Laborderie, Alain**
**3, rue du Canal**
**F-91190 Saint-Aubin (FR)**

(74) Mandataire: **Leszczynski, André et al**
**CABINET NONY & CIE. 29 rue Cambacérès**
**F-75008 Paris (FR)**

(54) **Dispositif pour localiser le point de franchissement d'une limite par un mobile.**

(57) L'invention est relative à un dispositif pour localiser le point de franchissement d'une limite par un mobile.

Il comprend un câble piézo-électrique (1), susceptible d'être disposé le long de cette limite, des moyens pour détecter une impulsion à chacune des extrémités du câble, des moyens pour mesurer le temps séparant l'arrivée d'une impulsion à une extrémité du câble, de l'arrivée d'une impulsion à l'autre extrémité du câble, et des moyens pour déduire ledit point de franchissement dudit temps.

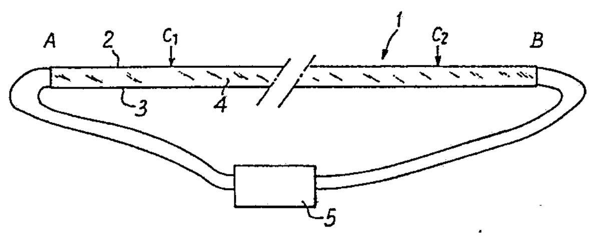


EP 0 315 546 A1

## Description

### Dispositif pour localiser le point de franchissement d'une limite par un mobile.

La présente invention concerne un dispositif pour localiser le point de franchissement d'une limite par un mobile.

On connait déjà de nombreux systèmes permettant de détecter la pénétration d'un intrus dans une zone d'accès contrôlée. Si certain de ces systèmes donnent satisfaction en ce qui concerne la détection de l'intrus, ils ne permettent pas de le localiser, et plus particulièrement de déterminer le point où il a franchi la limite de la zone d'accès contrôlée.

La présente invention vise à fournir un dispositif permettant cette localisation.

A cet effet, l'invention a pour objet un dispositif pour localiser le point de franchissement d'une limite par un mobile, caractérisé par le fait qu'il comprend un câble piézo-électrique susceptible d'être disposé le long de cette limite, des moyens pour détecter une impulsion à chacune des extrémités du câble, des moyens pour mesurer le temps séparant l'arrivée d'une impulsion à une extrémité du câble, de l'arrivée d'une impulsion à l'autre extrémité du câble, et des moyens pour déduire ledit point de franchissement dudit temps.

Un câble piézo-électrique peut, d'une manière générale, comprendre concentriquement une âme portante, une première électrode, une couche d'un matériau piézo-électrique, une deuxième électrode, et un isolant protecteur assurant sa tenue.

Un tel câble peut avoir une longueur de plusieurs centaines de mètres pour un diamètre de quelques millimètres.

Ce câble, lorsqu'une contrainte lui est appliquée en un point donné, se comporte comme générateur de tension à l'emplacement de cette contrainte. Les charges statiques développées en cet emplacement se déplacent le long du câble dans les deux directions à une vitesse proportionnelle à la constante de temps du câble, égale au produit de la capacité par la résistance électrique réparties le long de celui-ci.

Dans le cas où un choc est appliqué sur ce câble, les charges électriques développées peuvent être suffisantes pour générer une tension de quelques millivolts pour un choc de l'ordre d'une centaine de grammes, à plusieurs volts pour des chocs plus importants.

Par conséquent, si un mobile se déplace sur le câble, celui-ci détectera sa présence et la signalera par des impulsions électriques à ses deux extrémités.

Le temps de propagation de l'impulsion étant constant le long du câble, les deux impulsions arriveront aux deux extrémités à des instants différents fonction de la différence des distances du point d'impact aux deux extrémités.

Si l'on connait en outre la longueur du câble ainsi que l'extrémité à laquelle est arrivée la première impulsion, il est possible d'en déduire l'emplacement du point d'impact.

Il est par exemple possible d'appliquer la tension entre les conducteurs aux deux extrémités du câble aux deux voies d'un oscilloscope, et de lire directement sur l'écran l'écart entre les deux impulsions.

On peut en effet montrer que si A et B sont les deux extrémités des câbles, et si C est le point d'impact, alors :

$CA = (L - vT)/2$ si la première impulsion est arrivée en A, et

$CA = (L + vT)/2$ si la première impulsion est arrivée en B, où L est la longueur du câble,

v est la vitesse de propagation de l'impulsion dans le câble, et

T est le temps séparant les instants d'arrivée des deux impulsions aux points A et B.

On préfèrera toutefois mémoriser l'extrémité du câble sur laquelle arrive la première impulsion, de manière à appliquer celle des deux formules ci-dessus qui convient, soit à l'aide de moyens numériques tels qu'un calculateur, soit à l'aide de moyens câblés.

Dans ce dernier cas, on pourra par exemple prévoir un oscillateur ayant une fréquence représentative de la constante de temps du câble piézo-électrique, un compteur relié à cet oscillateur, un monostable connecté à chaque extrémité du câble et possédant une constante de temps représentative du temps de propagation d'une impulsion d'une extrémité du câble à l'autre, et des moyens pour compter les impulsions de l'oscillateur, soit pendant que les deux monostables sont à 1, soit pendant que l'un au moins des monostables est à 1, suivant que la première impulsion a été détectée à l'une ou l'autre extrémité du câble.

On peut montrer qu'ainsi, le contenu du compteur représente directement la distance du point d'impact à une extrémité prédéterminée du câble, sous réserve du choix convenable de la fréquence de l'oscillateur et de la constante de temps des monostables.

On décrira maintenant à titre d'exemple non limitatif un mode de réalisation particulier de l'invention en référence aux dessins schématiques annexés dans lesquels :

- la figure 1 est un schéma de principe d'un dispositif selon l'invention,
- la figure 2 est un schéma du circuit électronique de la figure 1, et
- les figures 3 et 4 représentent les signaux relevés sur le circuit de la figure 2 lors d'un impact sur le câble piézo-électrique respectivement plus près de A et plus près de B.

Le dispositif de la figure 1 comprend un câble piézo-électrique 1 schématisé par deux conducteurs 2 et 3 séparés par un matériau piézo-électrique 4. Les conducteurs 2 et 3 sont connectés à chacune de leurs extrémités à une unité électronique 5 telle que celle représentée à la figure 2.

Le câble 1 peut être ouvert, comme représenté à la figure 1, ou être replié sous forme de boucle avec ses deux extrémités au niveau de l'unité 5.

Les extrémités d'un seul des conducteurs ont

été représentées à la figure 2. Chacune de ces extrémités est appliquée à l'entrée d'une porte ET, 6a et 6b respectivement, dont les sorties sont utilisées pour déclencher des bascules RS 7a et 7b. La sortie de la bascule 7a est appliquée, après inversion, à l'entrée de la porte 6b et de même, la sortie de la bascule 7b est appliquée, après inversion, à l'entrée de la porte 6a.

Les signaux A et B sont également appliqués respectivement à l'entrée de monostables 8a et 8b. Si L est la longueur du câble, et v est la vitesse de propagation d'une impulsion dans le câble, on prend pour constante de temps des monostables la valeur $\tau = L/v$.

Les sorties des monostables 8a et 8b sont appliquées, d'une part à l'entrée d'une porte ET 9 et d'autre part à l'entrée d'une porte OU 10.

La sortie de la porte 9 de même que la sortie de la bascule 7a sont appliquées à l'entrée porte ET 11, tandis que la sortie de la porte 10 de même que la sortie de la bascule 7b sont appliquées à l'entrée d'une porte ET 12.

Les sorties de portes 11 et 12 sont appliquées à l'entrée d'une porte OU 13 dont la sortie est appliquée à une entrée d'une porte ET 14 dont l'autre entrée reçoit la sortie d'un oscillateur 15 de fréquence $f = v/2$.

Enfin, la sortie de la porte 14 est utilisée pour déclencher un compteur 16.

Si l'on suppose maintenant qu'un choc est appliqué sur le câble 1 au point $C_1$ plus proche de A que de B, des impulsions vont apparaître successivement en A et en B tel que représenté à la figure 3, séparées par un temps T.

L'impulsion arrivant sur A provoque le basculement de la bascule 7a qui empêche à son tour tout basculement ultérieur de la bascule 7b par l'intermédiaire de la porte 6b.

Par conséquent, la sortie de la porte 13 aura la même valeur que la sortie de la porte 11, c'est-à-dire MA.MB. ou MA et MB sont les sorties des monostables 8a et 8b respectivement.

La figure 3 représente les signaux MA, MB et MA.MB. On constate que le compteur 16 va compter $N_1$ impulsions provenant de l'oscillation avec :

$N_1 = f\ (\tau - T)$

Comme d'autre part :

$$T = \frac{C_1B - C_1A}{v} = \frac{L - 2C_1A}{v}$$

On en déduit immédiatement que :

$N_1 = C_1A$

De même dans le cas d'un impact au point $C_2$ plus proche de B que de A, les impulsions arrivent sur les lignes A et B telles que représentées à la figure 4 et sont séparées par un temps :

$$T = \frac{C_2A - C_2B}{v} = \frac{2C_2A - L}{v}$$

Dans ce cas, seule la bascule 7b passe à 1 de sorte que la sortie de la porte 13 a la même valeur que la sortie de la porte 12 c'ést-à-dire MA + MB.

Le compteur 16 compte par conséquent $N_2$ impulsions provenant de l'oscillateur 15 avec :

$N_2 = f\ (\tau + T)$
c'est-à-dire :
$N_2 = C_2A$

Ou constate par conséquent que lors d'un choc sur le câble 1, le compteur 16 compte toujours un nombere d'impulsions égal à la distance entre le point d'impact et le point A.

Diverses variantes et modifications peuvent bien entendu être apportées à la description qui précède sans sortir pour autant du cadre ni de l'esprit de l'invention.

## Revendications

1. Dispositif pour localiser le point de franchissement d'une limite par un mobile, caractérisé par le fait qu'il comprend un câble piézo-électrique (1), susceptible d'être disposé le long de cette limite, des moyens (8a,8b) pour détecter une impulsion à chacune des extrémités du câble, des moyens (9,10) pour mesurer le temps séparant l'arrivée d'une impulsion à une extrémité du câble, de l'arrivée d'une impulsion à l'autre extrémité du câble, et des moyens (15,16) pour déduire ledit point de franchissement dudit temps.

2. Dispositif selon la revendication 1, caractérisé par le fait qu'il comprend des moyens (7a,7b) pour mémoriser l'extrémité du câble sur laquelle arrive la première impulsion.

3. Dispositif selon la revendication 2, caractérisé par le fait qu'il comprend un oscillateur (15) ayant une fréquence représentative de la constante de temps du câble piézo-électrique, un compteur (16) relié à cet oscillateur, un monostable (8a,8b) connecté à chaque extrémité du câble et possédant une constante de temps représentative du temps de propagation d'une impulsion d'une extrémité du câble à l'autre, et des moyens (7a,7b,9-13) pour compter les impulsions de l'oscillateur, soit pendant que les deux monostables sont à 1, soit pendant que l'un au moins des monostables est à 1, suivant que la première impulsion a été détectée à l'une ou l'autre extrémité du câble.

Fig:1

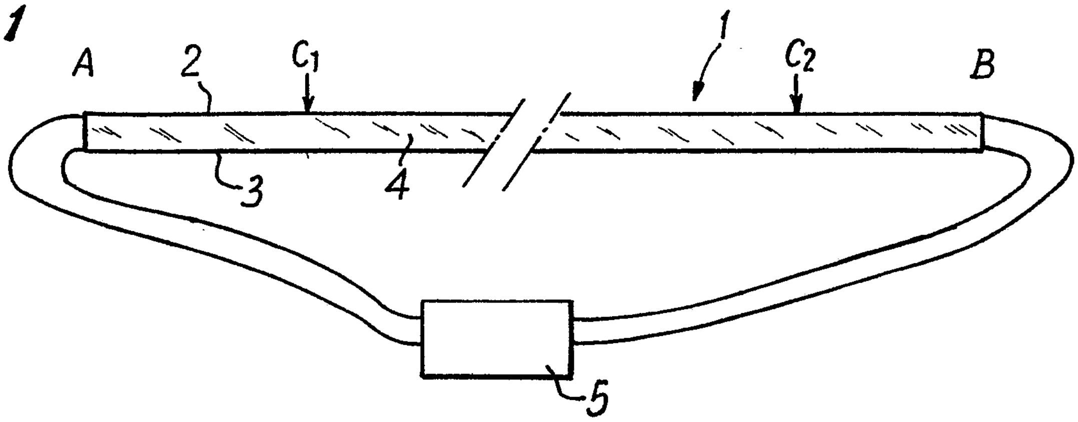


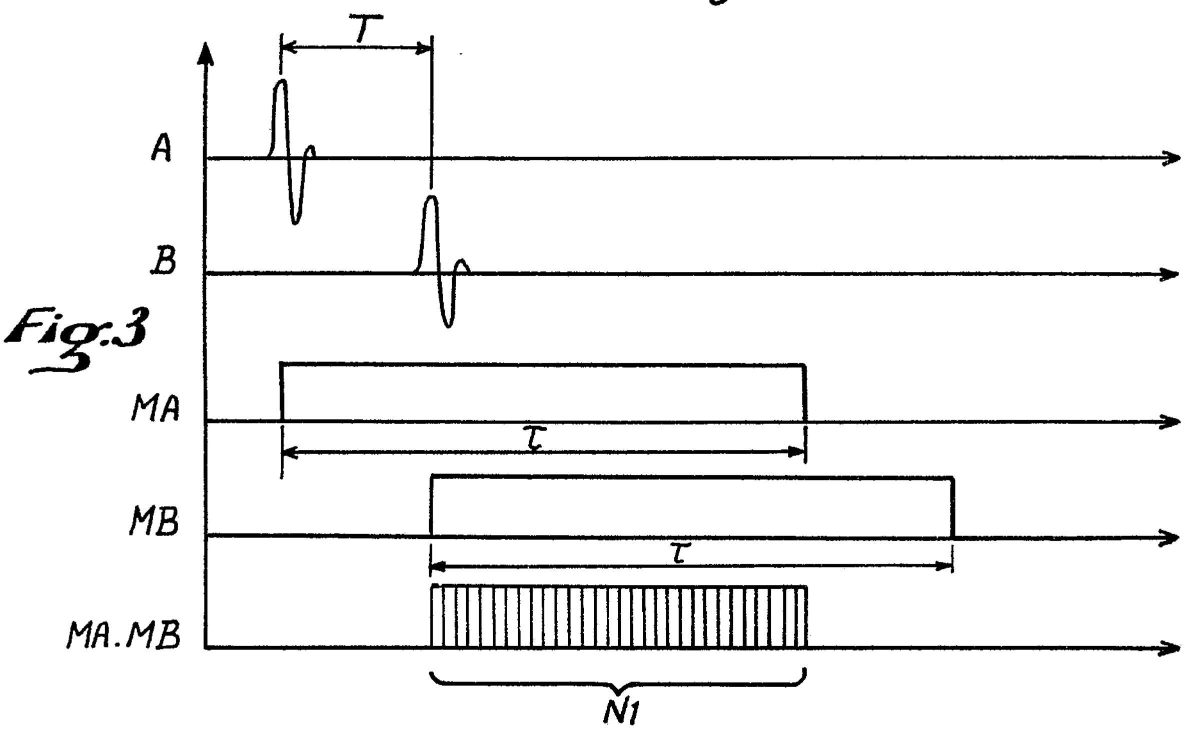


Fig:3

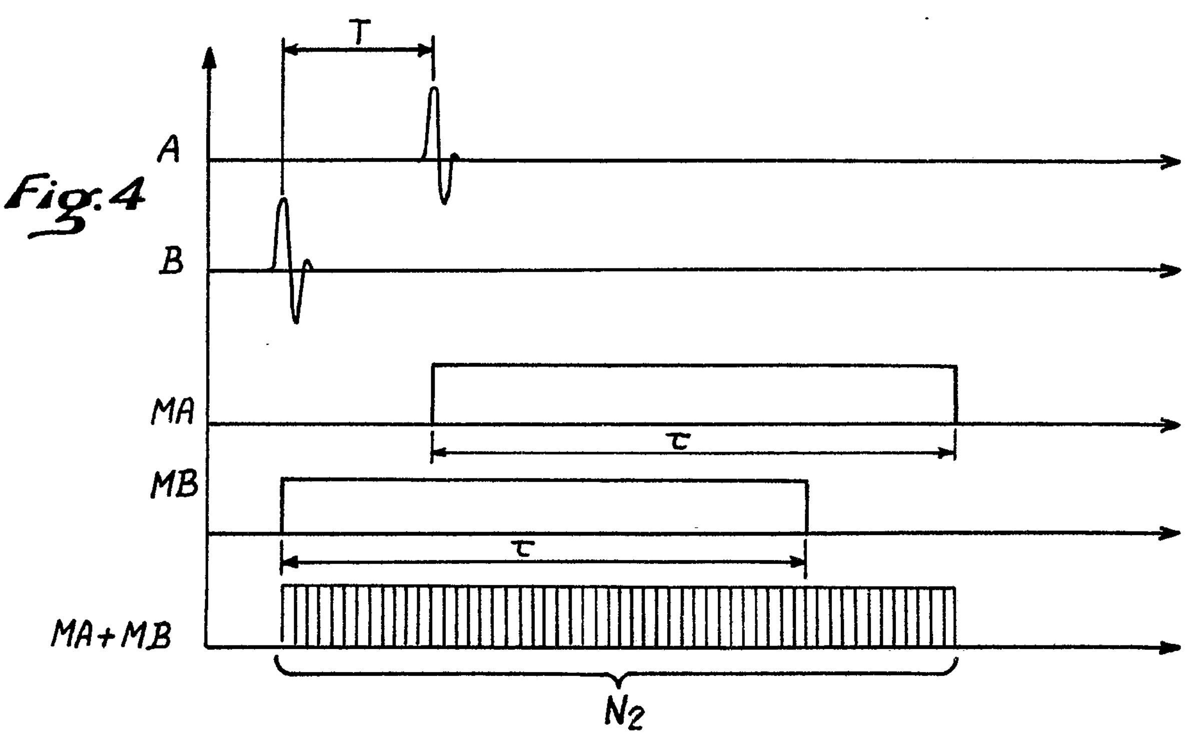


Fig:4

Fig. 2

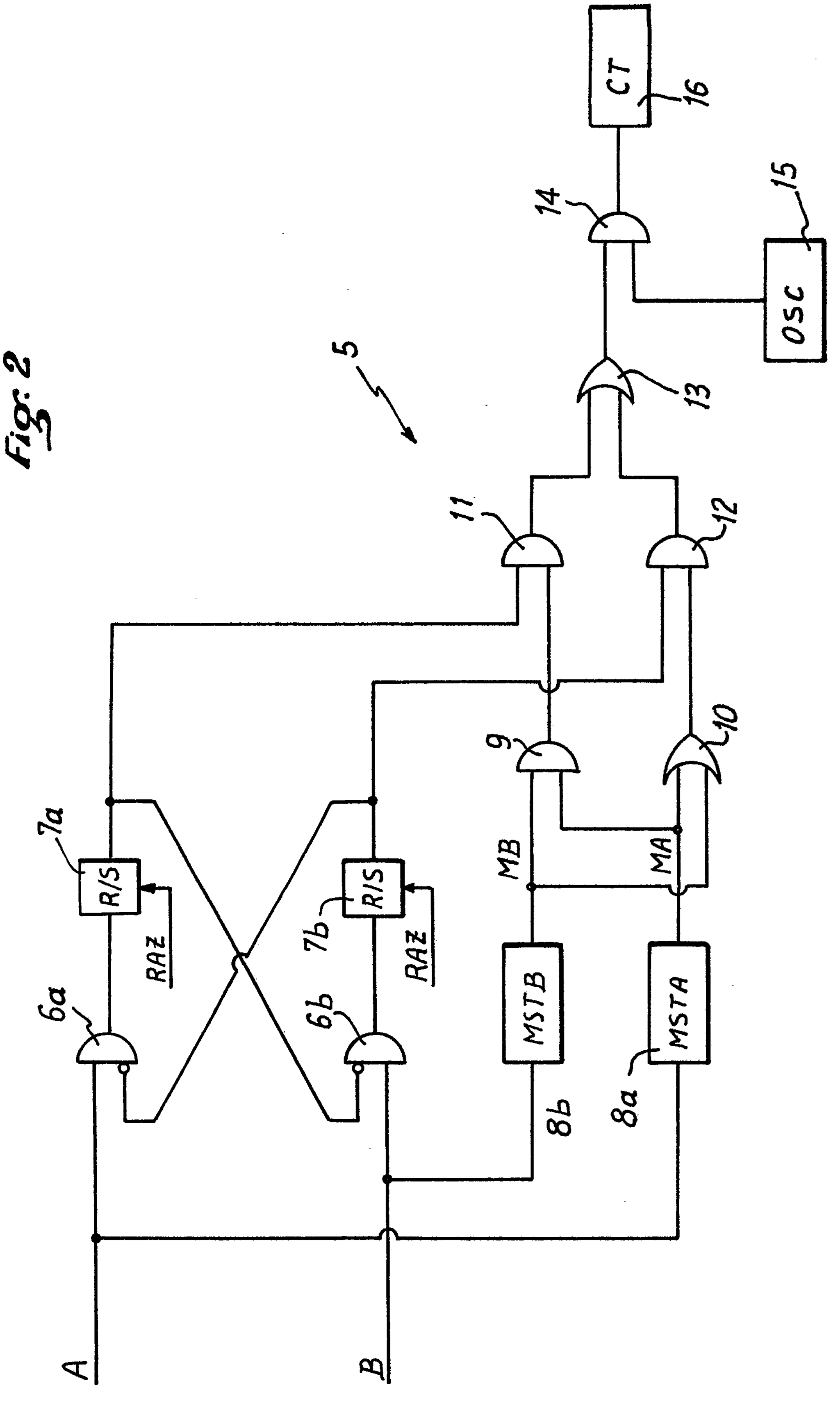
A
B
6a
6b
7a
7b
R/S
R/S
RAZ
RAZ
MSTB
MSTA
8a
8b
MB
MA
9
10
11
12
13
14
5
OSC
15
CT
16

Office européen des brevets

# RAPPORT DE RECHERCHE EUROPEENNE

Numero de la demande

EP 88 40 2783

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 808 364 (VEITH)<br>* Résumé; figures 1,2 *<br>----- | 1 | G 01 V 1/20<br>G 08 G 1/01<br>G 01 B 7/00 |
| | | | **DOMAINES TECHNIQUES RECHERCHES (Int. Cl.4)** |
| | | | G 01 V<br>G 08 G<br>G 01 D<br>G 06 K |

Le présent rapport a été établi pour toutes les revendications

| Lieu de la recherche | Date d'achèvement de la recherche | Examinateur |
|---|---|---|
| LA HAYE | 09-02-1989 | ANDERSON A.TH. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)